# NEUE EUROPÄISCHE PATENTSCHRIFT

(11) **EP 3 256 662 B2**
(45) Veröffentlichungstag und Bekanntmachung des Hinweises auf die Entscheidung über den Einspruch: **24.05.2023**
(45) Hinweis auf die Patenterteilung: 01.04.2020
(21) Anmeldenummer: 16703121.0
(22) Anmeldetag: 05.02.2016
(51) Int. Cl.: E04B 2/74, E04B 2/82

(54) **FUGENDICHTBAND MIT VORBESTIMMTER GEOMETRIE UND DICHTANORDNUNG MIT DERARTIGEM FUGENDICHTBAND**
SEALING TAPE WITH PREDETERMINED GEOMETRY AND SEALING ASSEMBLY COMPRISING SUCH A SEALING TAPE
BANDE D'ÉTANCHÉITÉ DE JOINT AYANT UNE GÉOMÉTRIE PRÉDÉFINIE ET SYSTÈME D'ÉTANCHÉITÉ DOTÉ D'UNE TELLE BANDE D'ÉTANCHÉITÉ DE JOINT

(30) Priorität: 13.02.2015 EP 15155102
(43) Veröffentlichungstag der Anmeldung: 20.12.2017
(73) Patentinhaber: Hilti Aktiengesellschaft, 9494 Schaan (LI)
(72) Erfinder: KLEIN, Manfred, 86916 Kaufering (DE); FÖRG, Christian, 86862 Dillishausen (DE); KÖGLER, Markus, 86807 Buchloe (DE); PAETOW, Mario, 86859 Igling (DE)
(74) Vertreter: Hilti Aktiengesellschaft Corporate Intellectual Property
(86) Internationale Anmeldenummer: PCT/EP2016/052461
(87) Internationale Veröffentlichungsnummer: WO 2016/128304

(56) Entgegenhaltungen:
- EP-A1- 0 312 937
- EP-A1- 1 983 119
- AT-B- 385 899
- DE-A1- 3 404 221
- DE-A1- 19 930 836
- DE-A1-102007 034 112
- DE-U1-202010 008 322
- US-A- 1 960 137
- US-A- 3 041 682
- US-A1- 2011 011 019
- US-A1- 2011 123 801
- US-A1- 2012 023 846
- US-A1- 2012 110 934
- US-A1- 2013 031 856
- US-B1- 8 739 495

## Beschreibung

### GEBIET DER ERFINDUNG

Die vorliegende Erfindung betrifft ein Fugendichtband sowie eine Dichtanordnung mit derartigem Fugendichtband zum Abdichten von Bauwerksfugen, insbesondere zur Abdichtung gegen Schall und Rauch und gegebenenfalls gegen Feuer. Insbesondere betrifft die Erfindung die akustische, rauchsichere und/oder brandsichere Abdichtung von Anschlussfugen bei Trockenbauwänden vor allem von Bewegungsfugen. Ein Fugendichtband mit den Merkmalen des Oberbegriffs des Anspruchs 1 ist aus dem Dokument US 3,041,682 bekannt.

### HINTERGRUND DER ERFINDUNG

Anschlussfugen entstehen in der Regel, wenn unterschiedliche Bauteile aufeinander treffen. Anschlussfugen befinden sich im Anschlussbereich zur Geschossdecke, zum Fußboden und zu Massivwänden. Durch Gewichtsbelastung oder thermische Einflüsse kann es bei Gebäuden zu einem Senken oder Heben der Decke kommen. Um Beschädigungen der Trockenbauwand zu vermeiden, wird in diesem Fall die obere Anschlussfuge als Bewegungsfuge ausgeführt. Als Bewegungsfugen werden daher Fugen zur Unterbrechung von Bauteilen bezeichnet, um Spannungsrissen vorzubeugen. Das Deckenprofil wird derart ausgeführt, dass eine Relativbewegung zwischen Deckenprofil und den senkrechten Wandkomponenten möglich ist.

Im Allgemeinen wird auf die Anschlussbauteile ein U-Profil befestigt, welches Teil des Ständerwerkes ist. Die Gipskartonplatten selber werden mit einem definierten Abstand zum Anschlussbauteil angebracht. Üblicherweise erfolgt die Abdichtung des Systems im Spalt zwischen Gipskartonplatte und Decke. Hierzu wird entweder eine geeignete

Dichtmasse eingebracht oder aber der Spalt mit Mineralwolle gefüllt und an der Oberfläche mit einer abdichtenden Schicht versehen. In beiden Fällen behindert das in der Fuge befindliche Material die Bewegung relativ stark, mit der Konsequenz, dass zur Erzielung einer ausreichenden Bewegungsaufnahme mit verhältnismäßig großen Fugenbreiten gearbeitet werden muss.

Insbesondere die Abdichtung des Spaltes mit Dichtmasse hat einige Nachteile. Sie ist insbesondere arbeitsintensiv und die Abdichtung neigt im Laufe der Zeit zu Rissbildung bei Überbeanspruchung. Ferner kann die Abdichtung erst nach Montage der Gipskartonplatten erfolgen und erfordert beidseitigen Zugang zu der fertig gestellten Trockenbauwand. Darüber hinaus ist diese Vorgehensweise fehleranfällig, da der Anwender selber die richtige Menge an Material dosieren muss, um den Spalt ausreichend abzudichten. Darüber hinaus muss der Trockenbauer die Fuge, entsprechend den Material und Dehneigenschaften der Dichtmasse, in der Breite dimensionieren. Bei der Installation der Dichtmasse kann dann nur noch die Fuge gefüllt werden. Bei einer Ausdehnung des Spaltes muss gewährleistet sein, dass die Dichtmasse ausreichend stark am Untergrund haftet und die entstehenden Zugkräfte aufnehmen kann. Häufig ist das nicht der Fall und es besteht die Gefahr des Ablösens der Dichtmasse vom Untergrund oder aber die Dichtmasse selber wird überbeansprucht und reißt. Im Falle einer Verringerung des Spaltes kann die Dichtmasse aufgrund ihrer Materialeigenschaften nur begrenzt komprimiert werden und es besteht die Gefahr, dass sie bei falsch dimensionierter Fuge aus dem Spalt gedrückt wird. Aufgrund des begrenzten Dehn- und Komprimiervermögens der Dichtmasse (max. +/- 25%) kommt der ausreichend großen Dimensionierung des Abstandes zwischen Gipskartonplatte und Decke eine große Bedeutung zu. Dies wird häufig unterschätzt, bei der Verwendung von gewöhnlichen Dichtmassen kann daher eine ausreichende Dichtigkeit oft nicht gewährleistet werden.

Zum Abdichten von Fugen existieren einige weitere Lösungen, insbesondere Fugenschnüre oder Fugensprays, die zum Teil dieselben Nachteile haben, wie sie für die Dichtmassen beschrieben wurden.

Aufgabe der vorliegenden Erfindung ist es daher, ein Fugendichtband bereitzustellen, das die Nachteile der bekannten Materialien vermeidet, das insbesondere einfacher und sicherer anzuwenden ist, die Montage weiterer Bauteile vereinfacht, eine gute Abdichtung bereits bei seiner Anwendung und eine hervorragende Dichtigkeit bei maximaler Bewegungsaufnahme gewährleistet.

Eine weitere Aufgabe der vorliegenden Erfindung ist es, eine Anordnung bereitzustellen, die im Brandfall eine bessere Abdichtung der Fuge zwischen zwei Bauteilen, insbesondere zwischen einer Trockenbauwand und einem Anschlussbauteil, wie eine Wand, eine Decke oder ein Boden, ermöglicht und so eine bessere und dauerhafte Abdichtung gegenüber Schall und/oder Rauch und gegebenenfalls einen besseren und dauerhaften Brandschutz bereitstellt und mit geringerem Arbeitsaufwand zuverlässig und fehlerfrei montiert werden kann.

Diese und weitere Aufgaben, die aus der folgenden Beschreibung der Erfindung ersichtlich sind, werden durch die vorliegende Erfindung, wie sie in dem unabhängigen Anspruch 1 beschrieben ist, gelöst.

Die abhängigen Ansprüche beziehen sich auf bevorzugte Ausführungsformen.

### ZUSAMMENFASSUNG DER ERFINDUNG

Die vorliegende Erfindung betrifft ein Fugendichtband zur Abdichtung einer Fuge zwischen einem ersten Bauteil und einem zweiten Bauteil, mit einem Dichtelement und einer Klebeschicht, wobei das Dichtelement eine vorbestimmte Geometrie aufweist, dadurch gekennzeichnet ist, dass das Dichtelement aus einem verformbaren, weichen, nach Kompression rückstellfähigen, intumeszierenden Schaumstoffmaterial besteht, wobei das Dichtelement über seinen gesamten Umfang fest mit einer Deckschicht, vorzugsweise einer Kunststofffolie, verbunden ist und wobei die Klebeschicht eine Selbstklebeschicht ist.

Die vorliegende Erfindung betrifft weiter eine Dichtanordnung zur Abdichtung einer Fuge zwischen zwei aneinander anliegenden Bauteilen, mit wenigstens einem ersten Bauteil, einem zweiten Bauteil und dem vorher beschriebenen Fugendichtband, wobei das Dichtelement im oberen Bereich der Fuge positioniert und dazu konfiguriert ist, die Fuge von außen abzudichten.

Andere Aufgaben und Merkmale dieser Erfindung sind zum Teil offensichtlich und werden zum Teil im Folgenden erläutert. Insbesondere wird der Gegenstand der vorliegenden Erfindung im Detail durch Bezugnahme auf die folgenden Figuren beschrieben:

### KURZE BESCHREIBUNG DER FIGUREN

Figur 1a zeigt eine skizzierte Vorderansicht eines Fugendichtbandes mit einem Dichtelement und einer Klebeschicht gemäß einer Ausführungsform der vorliegenden Erfindung, wobei das Dichtelement ein Vollprofil und Rundprofil aufweist.
Figur 1b zeigt einen Querschnitt durch die in Figur 1a gezeigte Ausführungsform eines erfindungsgemäßen Fugendichtbandes.
Figur 1c zeigt eine Perspektive der in Figur 1a und 1b gezeigten Ausführungsform eines erfindungsgemäßen Fugendichtbandes.
Figur 1d zeigt eine skizzierte Dichtanordnung mit der in Figuren 1a bis 1c gezeigten Ausführungsform eines erfindungsgemäßen Fugendichtbandes.
Figur 1e zeigt eine Schnittansicht durch ein fertiges Bauelement mit der in Figur 1d gezeigten Ausführungsform einer erfindungsgemäßen Dichtanordnung.
Figur 2a zeigt eine skizzierte Vorderansicht eines Fugendichtbandes mit einem Dichtelement und einer Klebeschicht gemäß einer Ausführungsform der vorliegenden Erfindung, wobei das Dichtelement ein Vollprofil und Rundprofil aufweist und wobei das Dichtelement mit einer überstehenden Folie versehen ist.
Figur 2b zeigt einen Querschnitt durch die in Figur 2a gezeigte Ausführungsform eines erfindungsgemäßen Fugendichtbandes.
Figur 2c zeigt eine skizzierte Dichtanordnung mit der in Figuren 2a und 2b gezeigten Ausführungsform eines erfindungsgemäßen Fugendichtbandes.
Figur 2d zeigt eine Schnittansicht durch ein fertiges Bauelement mit der in Figur 2c gezeigten Ausführungsform einer erfindungsgemäßen Dichtanordnung.
Figur 3a zeigt eine skizzierte Vorderansicht eines Fugendichtbandes mit einem Dichtelement und einer Klebeschicht gemäß einer Ausführungsform der vorliegenden Erfindung, wobei das Dichtelement ein Vollprofil und Rechteckprofil aufweist.
Figur 3b zeigt einen Querschnitt durch die in Figur 3a gezeigte Ausführungsform eines erfindungsgemäßen Fugendichtbandes.
Figur 3c zeigt eine Perspektive der in Figur 3a und 3b gezeigten Ausführungsform eines erfindungsgemäßen Fugendichtbandes.
Figur 3d zeigt eine skizzierte Dichtanordnung mit der in Figuren 3a bis 3c gezeigten Ausführungsform eines erfindungsgemäßen Fugendichtbandes.
Figur 3e zeigt eine Schnittansicht durch ein fertiges Bauelement mit der in Figur 3d gezeigten Ausführungsform einer erfindungsgemäßen Dichtanordnung.
Figur 4a zeigt eine skizzierte Vorderansicht eines Fugendichtbandes mit einem Dichtelement und einer Klebeschicht gemäß einer Ausführungsform der vorliegenden Erfindung, wobei das Dichtelement ein offenes Hohlprofil und Rundprofil aufweist.
Figur 4b zeigt einen Querschnitt durch die in Figur 4a gezeigte Ausführungsform eines erfindungsgemäßen Fugendichtbandes.
Figur 4c zeigt eine skizzierte Dichtanordnung mit der in Figuren 4a und 4b gezeigten Ausführungsform eines erfindungsgemäßen Fugendichtbandes.
Figur 4d zeigt eine Schnittansicht durch ein fertiges Bauelement mit der in Figur 4c gezeigten Ausführungsform einer erfindungsgemäßen Dichtanordnung.
Figur 5a zeigt eine skizzierte Vorderansicht eines Fugendichtbandes mit einem Dichtelement und einer Klebeschicht gemäß einer Ausführungsform der vorliegenden Erfindung, wobei das Dichtelement ein geschlossenes Hohlprofil und Rechteckprofil aufweist.
Figur 5b zeigt einen Querschnitt durch die in Figur 5a gezeigte Ausführungsform eines erfindungsgemäßen Fugendichtbandes.
Figur 5c zeigt eine skizzierte Dichtanordnung mit der in Figuren 5a und 5b gezeigten Ausführungsform eines erfindungsgemäßen Fugendichtbandes.
Figur 5d zeigt eine Schnittansicht durch ein fertiges Bauelement mit der in Figur 5c gezeigten Ausführungsform einer erfindungsgemäßen Dichtanordnung.
Figur 6 zeigt die schrittweise Vorgehensweise zur Herstellung eines fertigen Bauelements mit der in Figuren 1a bis 1c gezeigten Ausführungsform eines erfindungsgemäßen Fugendichtbandes.

### AUSFÜHRLICHE BESCHREIBUNG DER ERFINDUNG

Die folgenden Begriffe werden im Rahmen der vorliegenden Erfindung verwendet:
Der Begriff "Geometrie / Geometrien" im Rahmen der vorliegenden Erfindung umfasst verschiedene Querschnittsarten und Querschnittsformen. Dies bedeutet, dass das Dichtelement unterschiedliche Querschnittsarten und Querschnittsformen aufweisen kann. Unter Querschnittsarten werden u.a. Rundprofil (runder Querschnitt), Mehreckprofil (mehreckiger Querschnitt), insbesondere Quadratprofil (quadratischer Querschnitt), Rechteckprofil (rechteckiger Querschnitt), Parallelogrammprofil (Querschnitt in Form eines Parallelogramms), etc., verstanden. Unter Querschnittsformen werden u.a. Vollprofil und Hohlprofil verstanden, wobei beim Vollprofil das Dichtelement vollständig aus Dichtmaterial besteht, wohingegen beim Hohlprofil das Dichtelement nur teilweise aus Dichtmaterial besteht.

Der Begriff "verformbar" im Rahmen der vorliegenden Erfindung bedeutet, dass Unebenheiten im Bauteil ausgeglichen werden können, gegen das das Dichtelement gepresst wird. "Plastisch verformbar" bedeutet dabei, dass das Dichtelement verformbar ist und nach der Verformung nicht wieder in seine ursprüngliche Form zurückkehrt. "Elastisch verformbar" bedeutet dabei, dass das Dichtelement verformbar ist und nach der Verformung wieder in seine ursprüngliche Form zurückkehrt, d.h. dass das Material sich zu einem gewissen Grad reversibel verformen lässt.

Die Begriffe "aufweisen", "mit" und "haben" sollen einschließend sein und bedeuten, dass auch andere als die genannten Elemente gemeint sein können.

Der Begriff "Intumeszenz" im Rahmen der vorliegenden Erfindung bedeutet dabei, dass unter Einwirkung von Hitze, beispielsweise im Brandfall, sich das Material aufbläht und eine isolierende Schicht aus schwerentflammbarem Material bildet, also intumesziert.

Unter "langsam abbrennenden Schaumstoff" wird im Rahmen der vorliegenden Erfindung ein Schaumstoff verstanden, der keine Möglichkeit der Brandausbreitung durch den Schaumstoff bietet, nicht eigenentflammbar ist und auch nicht abtropft.

Im "oberen Bereich der Fuge positioniert" bedeutet, dass das Fugendichtband dabei insbesondere am zweiten Bauteil, vorzugsweise einer Decke, angeordnet ist.

Der Begriff "Klebeschicht" im Rahmen der vorliegenden Erfindung bedeutet eine Selbstklebeschicht.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

In einem Aspekt betrifft die vorliegende Erfindung ein Fugendichtband zur Abdichtung einer Fuge zwischen einem ersten Bauteil und einem zweiten Bauteil, mit einem Dichtelement und einer Klebeschicht, wobei das Dichtelement eine vorbestimmte Geometrie aufweist, dadurch gekennzeichnet, dass das Dichtelement aus einem verformbaren, weichen, nach Kompression rückstellfähigen, intumeszierenden Schaumstoffmaterial besteht, wobei das Dichtelement über seinen gesamten Umfang fest mit einer Deckschicht, vorzugsweise einer Kunststofffolie, verbunden ist und wobei die Klebeschicht eine Selbstklebeschicht ist.

In einem weiteren Aspekt betrifft die vorliegende Erfindung eine Dichtanordnung zur Abdichtung einer Fuge zwischen zwei aneinander anliegenden Bauteilen, mit wenigstens einem ersten Bauteil, einem zweiten Bauteil und dem vorher beschriebenen Fugendichtband, wobei das Fugendichtband im oberen Bereich der Fuge positioniert und dazu konfiguriert ist, die Fuge von außen abzudichten.

Es wurde herausgefunden, dass das erfindungsgemäße Fugendichtband sich besonders dazu eignet, in einfacher Weise eine Bauwerksfuge zwischen zwei aneinandergrenzenden Bauteilen sicher abzudichten, insbesondere gegen Schall und/oder Rauch und gegebenenfalls auch gegen Feuer. Damit das Fugendichtband seine Funktion erfüllen kann, muss das Dichtelement des Fugendichtbandes eine vorbestimmte Geometrie aufweisen. Ferner muss das Fugendichtband im oberen Bereich der Fuge positioniert und dazu konfiguriert sein, die Fuge von außen abzudichten.

Daher ist es ein Ziel der vorliegenden Erfindung, das Dichtelement zu beschreiben. Insbesondere ist es Ziel der vorliegenden Erfindung, die Geometrie des Dichtelementes detailliert zu beschreiben. Ferner ist es Ziel der der vorliegenden Erfindung, die Positionierung des Fugendichtbandes, insbesondere eine Dichtanordnung, zu beschreiben.

Das erfindungsgemäße Fugendichtband zur Abdichtung einer Fuge zwischen einem ersten Bauteil und einem zweiten Bauteil, mit einem Dichtelement und einer Klebeschicht, wobei das Dichtelement eine vorbestimmte Geometrie aufweist, ist dadurch gekennzeichnet, dass das Dichtelement aus einem verformbaren, weichen, nach Kompression rückstellfähigen, intumeszierenden Schaumstoffmaterial besteht, wobei das Dichtelement über seinen gesamten Umfang fest mit einer Deckschicht, vorzugsweise einer Kunststofffolie, verbunden ist und wobei die Klebeschicht eine Selbstklebeschicht ist.

Bevorzugte Querschnittsarten des Dichtelementes gemäß der vorliegenden Erfindung sind Vollprofil und Hohlprofil, wobei das Hohlprofil ein geschlossenes oder offenes Hohlprofil sein kann. Vollprofil und Hohlprofil mit großer Profilwandstärke haben den Vorteil, dass am Stoß zweier sich berührender Dichtelemente automatisch keine Lücke entsteht. Hohlprofile können stärker komprimiert werden, und somit mehr Bewegung aufnehmen. Besonders bevorzugt ist, dass das Dichtelement ein Vollprofil aufweist.

Bevorzugte Querschnittsformen des Dichtelementes gemäß der vorliegenden Erfindung sind Rundprofil, Mehreckprofil, insbesondere Rechteckprofil, Quadratprofil, Parallelogrammprofil, und Dreieckprofil. Besonders bevorzugt sind Rundprofil und Rechteckprofil, wobei Rechteckprofil am bevorzugtesten ist. Es sind jedoch auch andere oder gemischte Querschnittsformen denkbar und möglich, solange das Fugendichtband nach der Installation des Dichtelementes an die beiden Bauteile angrenzt und die zwischen den Bauteilen bestehende Fuge verschließen kann.

In einer bevorzugten Ausführungsform des erfindungsgemäßen Fugendichtbandes weist das Dichtelement ein Rundprofil auf.

In einer weiteren, bevorzugten Ausführungsform des erfindungsgemäßen Fugendichtbandes weist das Dichtelement ein Rechteckprofil auf.

In einer besonders bevorzugten Ausführungsform des erfindungsgemäßen Fugendichtbandes weist das Dichtelement ein Vollprofil und ein Rundprofil auf.

In einer weiteren, besonders bevorzugten Ausführungsform des erfindungsgemäßen Fugendichtbandes weist das Dichtelement ein Vollprofil und ein Rechteckprofil auf.

Die Geometrie der Dichtelemente kann vorgefertigt werden, zum Beispiel durch definiertes Zuschneiden, Extrudieren oder Pressen von geeignetem Dichtmaterial, oder direkt aus Flachmaterial, beispielsweise mittels Falten oder Rollen aus einem flachen Ausgangsmaterial, wie zum Beispiel Gewebe, insbesondere aus einem nichtbrennbaren Material, wie anorganische Fasern, beispielsweise Glasfasern, einem Vlies oder dergleichen hergestellt werden. Die Herstellung solcher Querschnittsarten und Querschnittsformen, ist dem Fachmann bekannt. Bevorzugt ist, dass die Geometrie des Dichtelementes durch definiertes Zuschneiden oder Extrudieren vorgefertigt wird.

Das erfindungsgemäße Dichtelement kann einstückig aus einem Material oder mehrteilig aus mehreren Materialien bestehen und beispielsweise als Schichtkörper vorliegen. In alternativen Ausführungsformen können der Außenbereich und der Innenbereich eines Dichtelementes separate Bereiche des Dichtelementes definieren, die unterschiedliche Querschnittsformen und/oder Querschnittsarten aufweisen und/oder aus unterschiedlichen Materialien bestehen können.

Erfindungsgemäß besteht das Dichtelement aus einem verformbaren, weichen, nach Kompression rückstellfähigen, intumeszierenden Schaumstoffmaterial. Das Material ist elastisch verformbar. Das Dichtelement besteht aus einem nach Kompression rückstellfähigen Material, wie beispielsweise Schaumstoff, Moosgummi, Zellkautschuk oder dergleichen. Das erfindungsgemäße Dichtelement besteht aus einem weichen, nach Kompression rückstellfähigen Schaumstoff. Als Schaumstoffmaterial sind übliche Schaumstoffe, wie Polyethylen- und Polyurethanschaumstoff oder Zellkautschuk zu nennen. Der Schaumstoff kann dabei ein offenzelliger Schaumstoff mit sehr geringem Luftdurchtrittswiderstand sein, ebenso ein nahezu geschlossenzelliger Schaumstoff mit extrem geringen Luftdurchtrittswerten. Auch Schaumstoffe mit Luftdurchtrittswerten, die zwischen den beiden oben genannten Extremfällen liegen, können im Rahmen der vorliegenden Erfindung verwendet werden. Der Schaumstoff kann mit einem Imprägnat getränkt sein, das die Dichteigenschaften des Schaumstoffs erhöht. Um Dichtigkeit gegenüber Rauch zu erreichen, sollte zumindest die Außenfläche des Dichtelements geschlossenporig ausgebildet sein. Alternativ kann ein offenzelliges Dichtelement mit einer Deckschicht oder Ummantelung, beispielsweise aus einer Folie, insbesondere Kunststofffolie versehen sein. Bevorzugt ist, dass das Dichtelement aus einem offenzelligen Polyurethanschaumstoff oder aus einem Zellkautschuk besteht.

Es hat sich als vorteilhaft erwiesen, wenn das Dichtelement aus einem langsam abbrennenden Schaumstoff, wie beispielsweise Zellkautschuk oder Polyurethanschaum, bestehen. Bei einem langsam abbrennenden Schaumstoff besteht keine Möglichkeit der Brandausbreitung durch den Schaumstoff. Eine Eigenentflammung ist bei den oben genannten Schaumstoffausgangsmaterialien ausgeschlossen. Vorteilhaft ist, dass im Brandfall auch kein Abtropfen erfolgt. Ein langsam abbrennender Schaumstoff sollte in einem Temperaturbereich zwischen 500°C bis 800°C noch mindestens 20%, noch mindestens 25%, vorzugsweise noch mindestens 30%, zwischen 20% bis 60%, zwischen 20% bis 40%, vorzugsweise zwischen 25% bis 30%, seines Ausgangsvolumens besitzen. Ferner sollte ein langsam abbrennender Schaumstoff in einem Temperaturbereich zwischen 500°C bis 800°C noch mindestens 10%, mindestens 20%, vorzugsweise noch mindestens 30%, zwischen 10% bis 40%, zwischen 10% bis 30%, vorzugsweise zwischen 15% bis 20%, seiner Ausgangsmasse besitzen.

Ferner kann das Material kann, sofern Brandschutzeigenschaften, wie beispielsweise Intumeszenz, gewünscht sind, entsprechende Additive enthalten. Unter Einwirkung von Hitze, wie im Brandfall, bläht sich das Material auf und bildet eine isolierende Schicht aus schwerentflammbarem Material. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen, gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

In einer bevorzugten Ausführungsform des erfindungsgemäßen Fugendichtbandes besteht das Dichtelement aus einem offenzelligen Schaum.

In einer weiteren, bevorzugten Ausführungsform des erfindungsgemäßen Fugendichtbandes besteht das Dichtelement aus einem geschlossenzelligen Schaum.

In einer besonderen bevorzugten Ausführungsform des erfindungsgemäßen Fugendichtbandes besteht das Dichtelement aus einem offenzelligen Polyurethanschaum.

In einer weiteren, besonderen bevorzugten Ausführungsform des erfindungsgemäßen Fugendichtbandes besteht das Dichtelement aus einem Zellkautschuk.

Dadurch, dass das Dichtelement des erfindungsgemäßen Fugendichtbandes über seinen gesamten Umfang fest von einer Deckschicht oder Ummantelung, beispielsweise aus einer Folie, insbesondere Kunststofffolie, umgeben ist, kann ein offenzelliges Schaummaterial für das Dichtelement verwendet werden.

Aus Fertigungsgründen kann es vorteilhaft sein, das Dichtelement mit einer überstehenden Folie, wie einem Folienstreifen, zu versehen.

Die Klebeschicht des erfindungsgemäßen Fugendichtbandes ist eine Selbstklebeschicht.

Die Positionierung des Fugendichtbandes an das Anschlussbauteil erfolgt mittels einer Selbstklebeschicht.

Die Anbringung, insbesondere die Verklebung, des erfindungsgemäßen Fugendichtbandes kann flächig oder nur punktuell ausgeführt werden, vorzugsweise durch Andrücken. Eigens ist die Verklebung nur für eine temporäre Fixierung des Fugendichtbandes notwendig. Sobald die Gipskartonplatte montiert ist, wird durch die Vorkomprimierung das Fugendichtband an Ort und Stelle gehalten.

Ist das Dichtelement mit einer überstehenden Folie versehen, wird die Klebeschicht auf dem überstehenden Folienstreifen angebracht, dieser umgeknickt und anschließend das Fugendichtband an das Bauteil angebracht.

Die Dimension und die Materialen des Fugendichtbandes werden entsprechend der geplanten Verwendung des Fugendichtbandes gewählt.

Im Allgemeinen wird die Dimension des Fugendichtbandes in Abhängigkeit der verwendeten Profile und des verwendeten Materials gewählt. Die Dimension muss so gewählt werden, dass das Fugendichtband den Spalt zwischen der Gipskartonplatte und der Decke ausfüllt und abdichtend sowohl an der Decke als auch an der Gipskartonplatte anliegt. Soll eine vertikale Bewegung der Gipskartonplatten zugelassen werden, muss das Fugendichtband der Bewegung der Gipskartonplatte folgen, damit der Kontakt mit der Gipskartonplatte nicht abreißt und keine Lücke zwischen Fugendichtband und Gipskartonplatte entstehen kann. Hierzu besteht das Dichtelement des Fugendichtbandes aus rückstellfähigem und komprimierbarem Material und wird bei der Montage der Gipskartonplatten entsprechend vorkomprimiert, damit einer Abwärtsbewegung der Gipskartonplatte, wodurch der Spalt zwischen dieser und der Decke vergrößert wird, gefolgt werden kann. Die voreingestellte Bewegungsfreiheit der Gipskartonplatte bestimmt somit die Dimension des Dichtelementes und somit des Fugendichtbandes.

Beispielhaft soll erwähnt sein, dass die Höhe der Schmalseite von einem rechteckigen Dichtelement in Abhängigkeit der gewünschten Anwendung des Fugendichtbandes gewählt wird, wobei bei einfacher Beplankung die Höhe etwa in der Dicke einer Gipskartonplatte und bei doppelter Beplankung die Höhe etwa in der doppelten Dicke einer Gipskartonplatte gewählt wird. Es ist aber auch möglich, bei einfacher Beplankung das für die doppelte Beplankung ausgelegte Fugendichtband zu verwenden.

Beispielhaft soll auch erwähnt werden, dass Material und Geometrie des Dichtelementes derart gewählt werden können, dass dessen Härte bzw. Komprimierbarkeit so eingestellt ist, dass allein durch das Eigengewicht der Gipskartonplatte im Bodenbereich der Dichtelemente auf eine definierte Höhe zusammengedrückt wird, beispielsweise durch einen zweilagigen Auf-bau des Dichtelements aus Schaumstoffen mit unterschiedlicher Stauchdichte. Damit kann ohne weiteres Messen ein korrekter Abstand zwischen Boden und Gipskarton eingestellt werden. Dies ist insbesondere dann erforderlich, wenn eine Beschädigung der Gipskartonplatte durch aufsteigende Nässe verhindert werden soll.

Im Folgenden wird die Erfindung anhand der Anwendung des Fugendichtbandes auf ein U-Profil eines Trockenbauständerwerks näher beschrieben, ohne dass hierdurch der Schutzbereich eingeschränkt wird.

Zum Erstellen einer erfindungsgemäßen Dichtanordnung, wird das erfindungsgemäße Fugendichtband nach der Anbringung eines ersten Bauteils an ein zweites Bauteil, positioniert, insbesondere auf Stoß mit dem ersten Bauteil angeordnet. Vorzugsweise ist das erste Bauteil ein Rahmenprofil eines Trockenbauständerwerks, etwa ein U-Profil, und das zweite Bauteil eine Wand, eine Decke oder ein Boden eines Bauwerks. Besonders bevorzugt ist das erste Bauteil ein U-Profil, und das zweite Bauteil eine Decke. Mit dieser Anordnung ist das Fugendichtband im oberen Bereich der Fuge positioniert und dazu konfiguriert, die Fuge von außen abzudichten.

In einer Möglichkeit zum Abdichten einer Anschlussfuge im Trockenbau wird das erfindungsgemäße Fugendichtband nach der Anbringung eines Profils, insbesondere ein U-Profil, an den Anschlussbauteilen, wie etwa eine Decke, Wand oder Boden, an bzw. vor jenem U-Profil positioniert und an dem Anschlussbauteil, vorzugsweise einer Decke, fixiert. In einem weiteren Arbeitsgang werden die Gipskartonplatten, ein- oder zweilagig, stirnseitig an das Dichtelement gedrückt, so dass bei doppelter Beplankung die beiden Gipskartonplatten mit jeweils ihrer Oberkante in Kontakt mit dem Dichtelement kommen, und dadurch eine Abdichtungder Fuge erreicht wird. Um die Bewegung der Gipskartonplatte(n) zuzulassen, ohne dass bei maximaler Bewegung ein Spalt zwischen dem Dichtelement und der Gipskartonplatte bzw. den Gipskartonplatten entsteht, muss bei der Montage der Gipskartonplatte(n) das Dichtelement komprimiert werden. Sobald die Gipskartonplatte montiert ist, wird durch die Vorkomprimierung das Fugendichtband an Ort und Stelle gehalten. Weiter werden durch diese Komprimierung etwaig vorhandene Unebenheiten verschlossen.

Hierbei wird das Material und die Dicke des Dichtelements jeweils so gewählt, dass das Dichtelement die Bewegung der Gipskartonplatte(n) nicht behindert und bei maximaler Fugenbreite weiterhin die Oberkante der Gipskartonplatte(n) das Dichtelement berührt, um eine hinreichende Abdichtung gegen Gase sicherzustellen. Die Breite des Dichtelements wird bevorzugt so gewählt, dass diese etwa der doppelten Breite einer Gipskartonplatte entspricht. Es hat sich herausgestellt, dass eine hinreichende Abdichtung auch dann erreicht werden kann, wenn die Breite des Dichtelements der Breite nur einer Gipskartonplatte entspricht.

Bei der Anordnung des Fugendichtbandes an der Decke und auf Stoß mit dem U-Profil können Unebenheiten in beiden Bauteilen ausgeglichen werden und eine einfache Positionierung mit einer Verklebung an nur einem Bauteil ist möglich. Ferner kann durch die anschließende Positionierung der Gipskartonplatte sowie durch die Auswahl der Dichtmaterialien und/oder Geometriegestaltung des Fugendichtbandes der Fugenabstand kontrolliert werden.

Alternativ kann bei Verwendung nur einer Gipskartonplatte, diese nicht von unten auf Stoß mit dem Dichtelement montiert werden, sondern so, dass die Gipskartonplatte mit dem Dichtelement teilweise überlappt. Dadurch überragt die Gipskartonplatte das Dichtelement teilweise und der überlappende Teil des Dichtelements wird zwischen das U-Profil und die Gipskartonplatte gepresst. Es hat sich herausgestellt, dass auch hierdurch eine ausreichende Abdichtung, insbesondere gegen Gase, erreicht werden kann. Zur Verbesserung der Dichtigkeit und/oder der Gleiteigenschaften kann das Dichtband teilweise mit einer Schicht aus einem Material, welche die Bewegung der Gipskartonplatte weder behindert noch durch diese zerstört wird, wie etwa eine Kunststofffolie, kaschiert werden. Auf beispielsweise eine Folie lässt sich einfach die Positionierungsmarkierung für die Gipskartonplatte aufbringen.

Bei dieser Montageart wird eine große Bewegungsaufnahme, im Verhältnis zur Fugenbreite, möglich. Ferner ist diese Art montagefreundlicher als die zuvor erwähnte einfache oder doppelte Beplankung, da die Gipskartonplatte ohne Abstandmessung einfach auf dem Dichtelement montiert werden kann. Bei Verwendung einer Positionierungsmarkierung kann die Gipskartonplatte ohne Abstandmessung montiert werden. Darüber hinaus ist man bei dieser Montageart nicht auf gut komprimierbare Materialien für die Dichtelemente angewiesen und hat daher eine relativ große Freiheit bei der Wahl des Materials.

In einer weiteren, besonders bevorzugten Alternative kann eine Abdichtung der Fuge erreicht werden, wenn bei doppelter Beplankung die beiden Gipskartonplatten derart horizontal versetzt montiert werden, dass die äußere der beiden Gipskartonplatten (auch als äußere, zweite Gipskartonplatte bezeichnet) höher (d.h. näher an die Decke) als die innere Gipskartonplatte (auch als innere, erste Gipskartonplatte bezeichnet) montiert wird. In dieser Ausführungsform wird die Dicke des Dichtelements entsprechend der Dicke einer Gipskartonplatte gewählt. Die erste, innere Gipskartonplatte wird derart montiert, dass deren Oberkante die Stirnflächen des Dichtelements berührt, wobei keine oder wenig Vorkomprimierung des Dichtelements erforderlich ist. Die zweite, äußere Gipskartonplatte wird horizontal versetzt angebracht, d.h. sie wird höher montiert als die erste, innere Gipskartonplatte, so dass sie den Dichtstreifen teilweise überdeckt. Dabei sollten sich das Dichtelement und die Gipskartonplatte dichtend aneinanderlegen, um den Spalt zwischen der äußeren, zweiten Gipskartonplatte und dem Dichtelement, insbesondere gegen Gase, abzudichten. Damit findet eine Abdichtung zwischen Dichtelement und dem zweiten Bauteil, etwa eine Decke, eine Wand oder ein Boden, sowie zwischen Dichtelement und äußerer, zweiter Gipskartonplatte statt.

Zwischen dem zweiten Bauteil, etwa eine Decke, eine Wand oder ein Boden, und der äußeren, zweiten Gipskartonplatte verbleibt ein leerer Spalt. Dieser Spalt steht im Falle einer vertikalen Bewegung des zweiten Bauteils oder der Gipskartonplatten vollständig einer Bewegungsaufnahme zur Verfügung.

Abhängig davon wie weit die äußere, zweite Gipskartonplatte das Dichtelement überdeckt (Größe des Versatzes) kann auch eine Bewegung in die andere Richtung aufgenommen werden. Wichtig ist, dass in diesem Falle eine Überdeckung zwischen der zweiten Gipskartonplatte und dem Dichtstreifen gewährleistet bleibt. Bevorzugt wird daher die Dimension des Dichtelements so gewählt, dass dessen Dicke etwas größer ist als die Dicke einer Gipskartonplatte und dessen Höhe etwas mehr als die maximal zulässige Bewegung der Bauteile (maximale Fugenbreite) umfasst.

Dadurch dass die Dicke des Dichtelements größer ist als die Dicke der Gipskartonplatte wird die Gipskartonplatte bei deren Montage gegen das Dichtelement gepresst und etwas komprimiert, wodurch der Spalt zwischen Dichtelement und Gipskartonplatte zuverlässig, insbesondere gegen Gase, abgedichtet wird.

Für eine leichtere Einstellung des richtigen Fugenmaßes bei der äußeren, zweiten Gipskartonplatte können Markierungen seitlich auf dem Fugendichtband angebracht werden, eine sogenannte Positionierungsmarkierung. Zur Verbesserung der Dichtigkeit und/oder der Gleiteigenschaften kann das Dichtband einseitig mit einer Schicht aus einem Material, welche die Bewegung der Gipskartonplatte weder behindert noch durch diese zerstört wird, wie etwa eine Kunststofffolie, kaschiert werden. Auf beispielsweise eine Folie lässt sich einfach die Positionierungsmarkierung für die äußere, zweite Gipskartonplatte aufbringen.

Bei dieser Montageart wird eine maximale Bewegungsaufnahme, im Verhältnis zur Fugenbreite, möglich. Ferner ist diese Art sehr montagefreundlich, da zum einen die erste Gipskartonplatte ohne Abstandmessung einfach auf Kontakt zu dem Dichtelement montiert werden kann. Zum zweiten kann insbesondere bei Verwendung einer Positionierungsmarkierung die zweite Gipskartonplatte ebenfalls ohne Abstandmessung montiert werden. Darüber hinaus ergibt sich durch diese Montageart eine größtmögliche Freiheit bei der Wahl des Materials für die Dichtelemente, da diese nur wenig komprimiert werden und somit nur geringe Anforderung an die Komprimierbarkeit des Dichtelements gestellt werden.

Erfindungsgemäß lässt sich das Fugendichtband auf alle Arten von Anschlussfugen, bei denen ein Bauteil auf ein anderes Bauteil trifft. Dementsprechend lässt sich das Fugendichtband auf alle Profile, auch geschlossene Profile oder Holzbalken, anwenden, die zu einer Anschlussfläche abgedichtet werden müssen.

Eine besonders bevorzugte Anwendung des Fugendichtbandes betrifft die Abdichtung der Profile im Trockenbau, wobei das erste Bauteil ein Decken-, Boden- oder Wandprofil oder ein Metall- oder Holzständerwerk eines Trockenbauelements ist und das zweite Bauteil ein Boden, eine Decke oder eine Wand eines Bauelements, beispielsweise ein Mauerwerk oder Betonbauelement, ist. Bei dem Profil kann es sich um irgendeines der üblicherweise verwendeten Profile für den Trockenbau handeln, unabhängig davon, ob es einen geschlitzten oder ungeschlitzten Steg zw. geschlitzte oder ungeschlitzte Flansche aufweist. Die weiteren Bauteile sind Gipskartonplatten, die eng an die Profile anliegen und am Ständerwerk befestigt werden. Um eine vertikale Bewegung der Gipskartonplatten, etwa im Falle eines Erdbebens, zuzulassen, werden die Gipskartonplatten auf Abstand zu einer Wand, einem Boden oder einer Decke, vertikal beweglich montiert. Dadurch entsteht eine Lücke (hierin auch Fuge genannt) zwischen der Gipskartonplatte und der Wand, dem Boden oder der Decke. Diese Fuge wird durch das Dichtelement des Fugendichtbandes ausgefüllt, so dass das Dichtelement die Fuge gegen Schall und/oder Rauch und je nach Material des Dichtelements gegebenenfalls auch gegen Feuer abdichtet.

Ohne den Schutzumfang der Erfindung einzuschränken, wird die Erfindung anhand spezieller Ausführungsformen des Fugendichtbandes sowie seiner Positionierung näher beschrieben. In diesen Ausführungsformen wird das Fugendichtband auf die Anschlussfugen bei Trockenbauwänden angewendet. Dem Fachmann ist klar, dass das Dichtband auch auf andere geartete Bauwerksfugen angewendet werden kann.

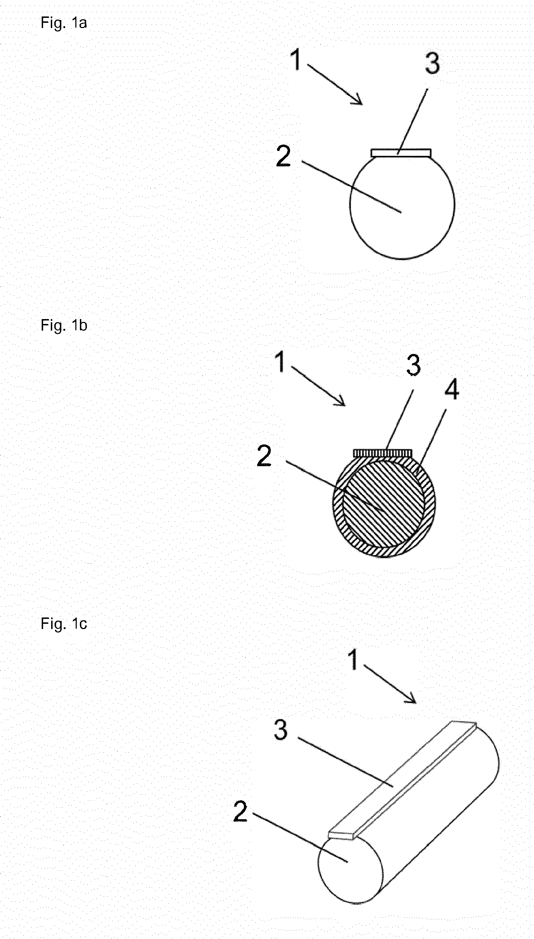

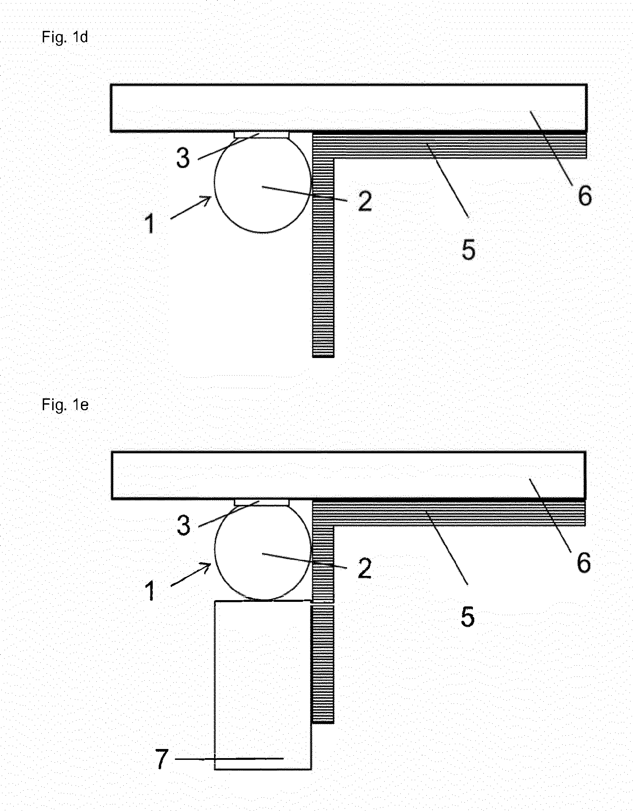

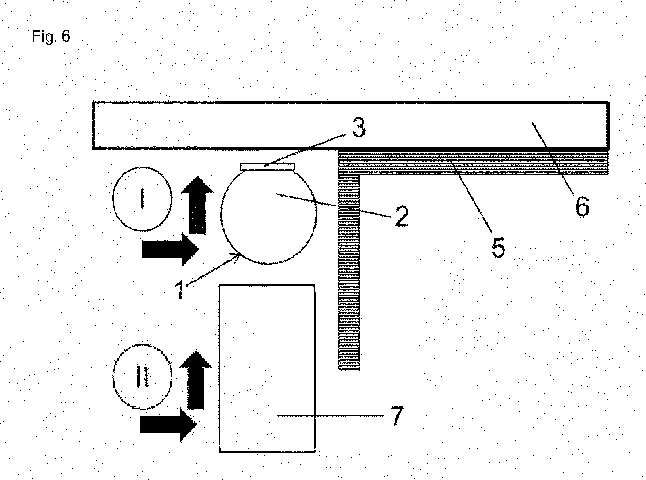

In Figuren **1a** bis **1c** ist eine bevorzugte Ausführungsform eines erfindungsgemäßen Fugendichtbandes 1 gezeigt. Das Fugendichtband 1 umfasst ein Dichtelement 2 und eine Klebeschicht 3. Das Dichtelement 2 weist ein Rundprofil und ein Vollprofil auf. Weiter ist das Dichtelement 2 vollständig, d.h. über seinen vollen Umfang von einer Deckschicht 4 umgeben. Das Dichtelement 2 besteht aus einem komprimierbaren Schaumstoff, der gegebenenfalls Brandschutzadditive enthält, und die Deckschicht 4 aus einer Kunststofffolie. In Figur **1d** ist eine Dichtanordnung mit der in Figuren 1a bis 1c gezeigten Ausführungsform eines erfindungsgemäßen Fugendichtbandes dargestellt, wobei das Fugendichtband 1 nach der Anbringung eines U-Profils 5 an einer Decke 6 und auf Stoß mit dem U-Profil 5 positioniert und an der Decke 6 fixiert ist. Figur **1e** zeigt eine Schnittansicht durch ein fertiges Bauelement mit der in Figur 1d gezeigten Ausführungsform einer erfindungsgemäßen Dichtanordnung, wobei das Dichtelement im oberen Bereich der Fuge positioniert und dazu konfiguriert ist, die Fuge von außen abzudichten. Insbesondere ist in Figur **6** die schrittweise Vorgehensweise zur Herstellung eines fertigen Bauelements mit der in Figuren 1a bis 1c gezeigten Ausführungsform eines erfindungsgemäßen Fugendichtbandes zur Abdichtung eines Spalts zwischen einer Decke 6, dem U-Profil 5 eines Trockenbauständerwerks und einer Gipskartonplatte 7 skizziert.

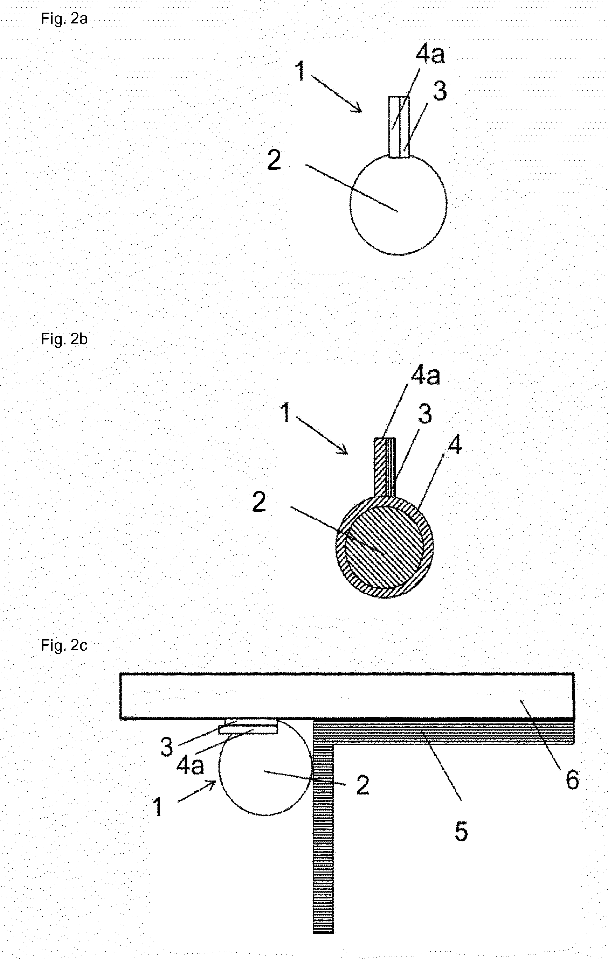

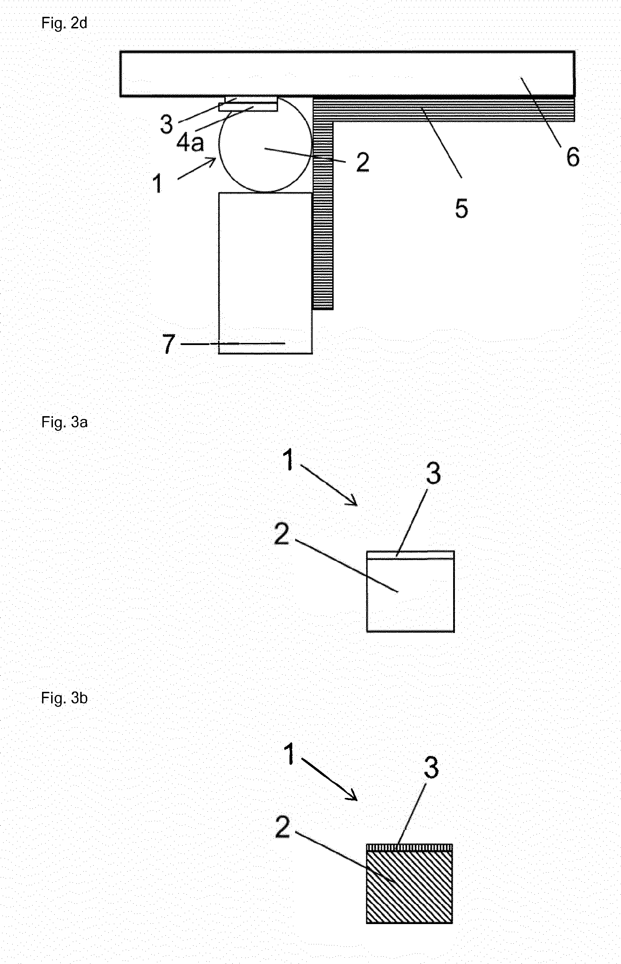

In Figuren **2a** und **2b** ist eine weitere bevorzugte Ausführungsform eines erfindungsgemäßen Fugendichtbandes 1 gezeigt. Das Fugendichtband 1 umfasst ein Dichtelement 2 und eine Klebeschicht 3. Das Dichtelement 2 weist ein Rundprofil und ein Vollprofil auf. Weiter ist das Dichtelement 2 vollständig, d.h. über seinen vollen Umfang von einer Deckschicht 4 umgeben. Ferner ist das Dichtelement 2 mit einem überstehenden Folienstreifen 4a versehen. Das Dichtelement 2 besteht aus einem komprimierbaren Schaumstoff, der gegebenenfalls Brandschutzadditive enthält, und die Deckschicht 4 sowie der Folienstreifen 4a aus einer Kunststofffolie. In Figur 2c ist eine Dichtanordnung mit der in Figuren 2a und 2b gezeigten Ausführungsform eines erfindungsgemäßen Fugendichtbandes dargestellt, wobei das Fugendichtband 1 nach der Anbringung eines U-Profils 5 an einer Decke 6 und auf Stoß mit dem U-Profil 5 positioniert und an der Decke 6 fixiert ist. Die Klebeschicht 3 ist in dieser Ausführungsform auf dem überstehenden Folienstreifen 4a angebracht, dieser wird umgeknickt und anschließend das Fugendichtband an das Bauteil angebracht. Figur **2d** zeigt eine Schnittansicht durch ein fertiges Bauelement mit der in Figur 2c gezeigten Ausführungsform einer erfindungsgemäßen Dichtanordnung, wobei das Dichtelement im oberen Bereich der Fuge positioniert und dazu konfiguriert ist, die Fuge von außen abzudichten.

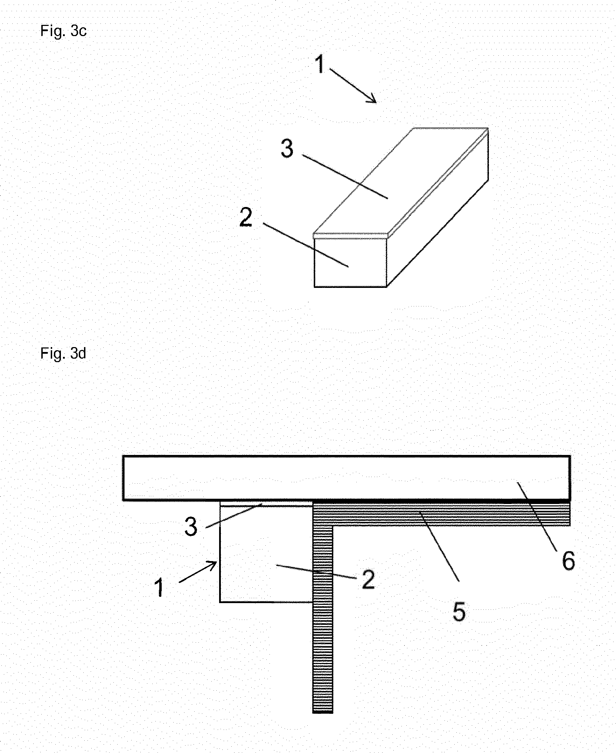

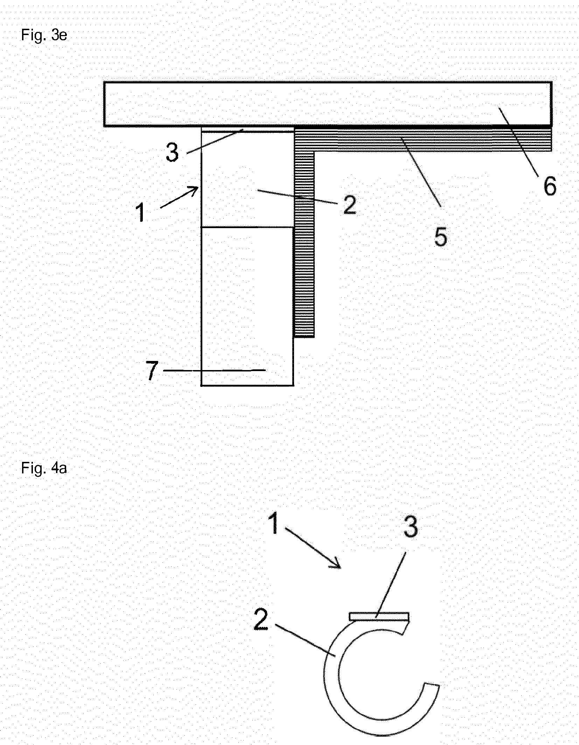

In Figuren **3a** bis **3c** ist eine weitere bevorzugte Ausführungsform eines erfindungsgemäßen Fugendichtbandes 1 gezeigt. Das Fugendichtband 1 umfasst ein Dichtelement 2 und eine Klebeschicht 3. Das Dichtelement 2 weist ein Rechteckprofil und ein Vollprofil auf. Das Dichtelement 2 besteht aus einem komprimierbaren Schaumstoff, der gegebenenfalls Brandschutzadditive enthält. In Figur **3d** ist eine Dichtanordnung mit der in Figuren 3a bis 3c gezeigten Ausführungsform eines erfindungsgemäßen Fugendichtbandes dargestellt, wobei das Fugendichtband 1 nach der Anbringung eines U-Profils 5 an einer Decke 6 und auf Stoß mit dem U-Profil 5 positioniert und an der Decke 6 fixiert ist. Figur **3e** zeigt eine Schnittansicht durch ein fertiges Bauelement mit der in Figur 3d gezeigten Ausführungsform einer erfindungsgemäßen Dichtanordnung, wobei das Dichtelement im oberen Bereich der Fuge positioniert und dazu konfiguriert ist, die Fuge von außen abzudichten.

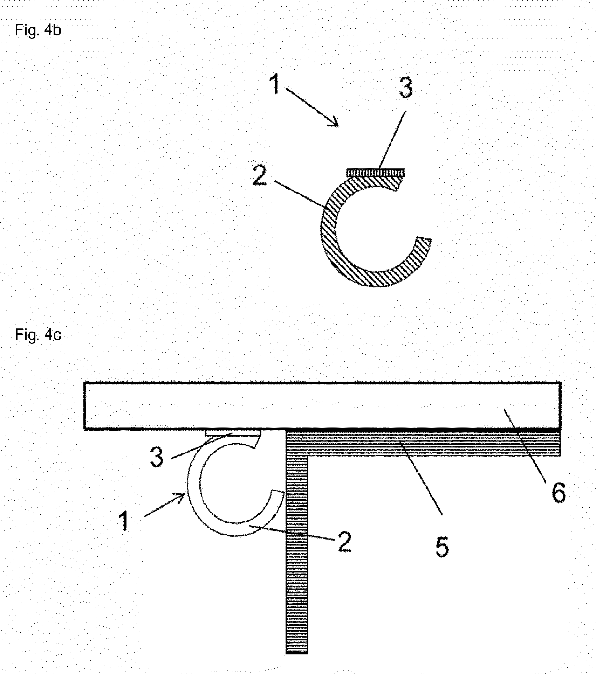

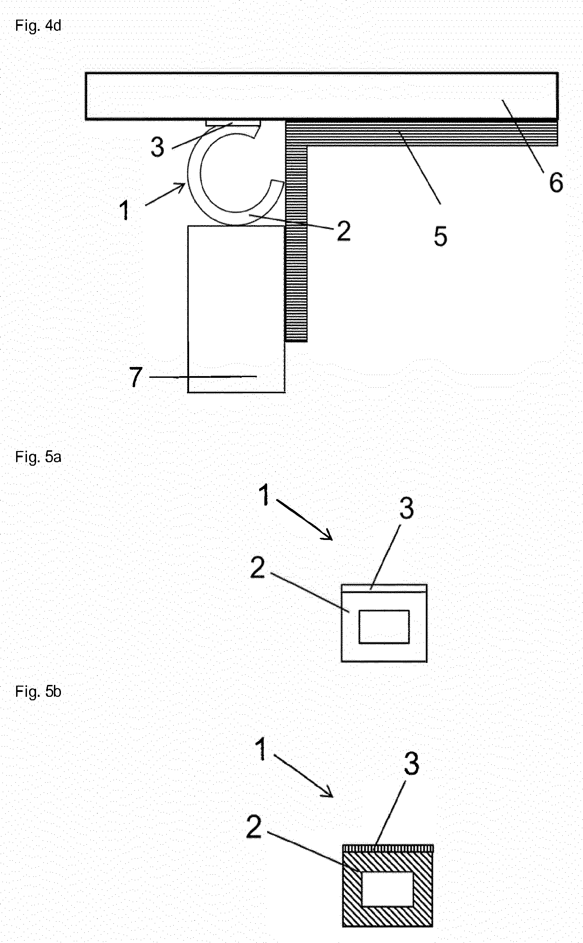

In Figuren **4a** und **4b** ist eine weitere bevorzugte Ausführungsform eines erfindungsgemäßen Fugendichtbandes 1 gezeigt. Das Fugendichtband 1 umfasst ein Dichtelement 2 und eine Klebeschicht 3. Das Dichtelement 2 weist ein offenes Hohlprofil und ein Rundprofil auf. Das Dichtelement 2 besteht aus einem komprimierbaren Schaumstoff, der gegebenenfalls Brandschutzadditive enthält. In Figur **4c** ist eine Dichtanordnung mit der in Figuren 4a und 4b gezeigten Ausführungsform eines erfindungsgemäßen Fugendichtbandes dargestellt, wobei das Fugendichtband 1 nach der Anbringung eines U-Profils 5 an einer Decke 6 und auf Stoß mit dem U-Profil 5 positioniert und an der Decke 6 fixiert ist. Die offene Seite des Hohlprofils des Dichtelementes 2 zeigt in Richtung U-Profil 5. Figur **4d** zeigt eine Schnittansicht durch ein fertiges Bauelement mit der in Figur 4c gezeigten Ausführungsform einer erfindungsgemäßen Dichtanordnung, wobei das Dichtelement im oberen Bereich der Fuge positioniert und dazu konfiguriert ist, die Fuge von außen abzudichten.

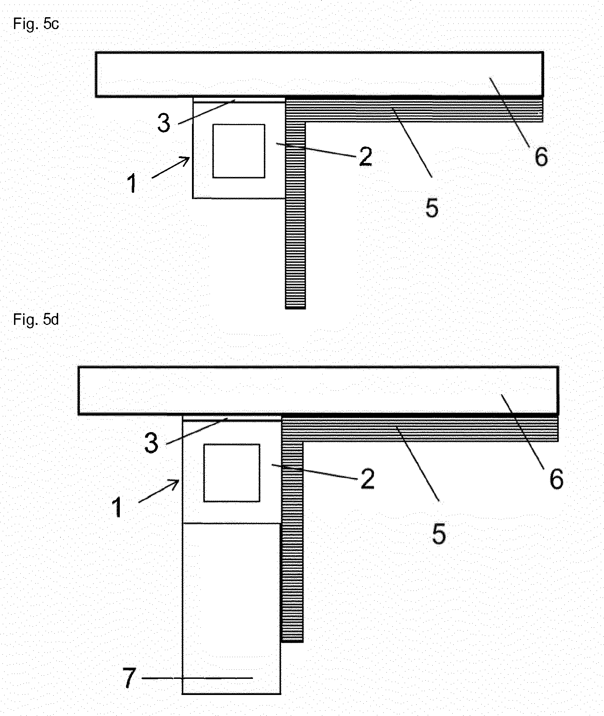

In Figuren **5a** und **5b** ist eine weitere bevorzugte Ausführungsform eines erfindungsgemäßen Fugendichtbandes 1 gezeigt. Das Fugendichtband 1 umfasst ein Dichtelement 2 und eine Klebeschicht 3. Das Dichtelement 2 weist ein geschlossenes Hohlprofil und ein Rechteckprofil auf. Das Dichtelement 2 besteht aus einem komprimierbaren Schaumstoff, der gegebenenfalls Brandschutzadditive enthält. In Figur **5c** ist eine Dichtanordnung mit der in Figuren 5a und 5b gezeigten Ausführungsform eines erfindungsgemäßen Fugendichtbandes dargestellt, wobei das Fugendichtband 1 nach der Anbringung eines U-Profils 5 an einer Decke 6 und auf Stoß mit dem U-Profil 5 positioniert und an der Decke 6 fixiert ist. Figur **5d** zeigt eine Schnittansicht durch ein fertiges Bauelement mit der in Figur 5c gezeigten Ausführungsform einer erfindungsgemäßen Dichtanordnung, wobei das Dichtelement im oberen Bereich der Fuge positioniert und dazu konfiguriert ist, die Fuge von außen abzudichten.

In Figur **6** ist die schrittweise Vorgehensweise zur Herstellung eines fertigen Bauelements mit der in Figuren 1a bis 1c gezeigten Ausführungsform eines erfindungsgemäßen Fugendichtbandes zur Abdichtung eines Spalts zwischen einer Decke 6, dem U-Profil 5 eines Trockenbauständerwerks und einer Gipskartonplatte 7 skizziert. Zuerst wird in dem ersten Schritt I das Fugendichtband 1 nach der Anbringung eines U-Profils 5 an einer Decke 6 und auf Stoß mit dem U-Profil 5 positioniert und an der Decke 6 in üblicher Weise fixiert, vorzugsweise mittels Klebeschicht. Dann wird in einem zweiten Schritt II die Gipskartonplatte 7 an die Flansche des U-Profils 5 angelegt, nach oben Richtung Decke 6 geschoben, wobei ein Spalt zwischen der Oberkante der Gipskartonplatte 7 und der Decke 6 verbleibt, der mit dem Dichtelement 2 des Fugendichtbandes 1 ausgefüllt ist, um etwa eine vertikale Bewegung der Gipskartonplatte 7 zuzulassen. Dadurch wird das Dichtelement 2 zusammengedrückt und dichtet so den Spalt zwischen der Decke 6 und dem U-Profil 5 und den Spalt zwischen der Decke 6 und der Gipskartonplatte 7 ab. Der fertige Aufbau ist in Figur **1e** gezeigt.

Figur 6 steht beispielhaft für die Vorgehensweise zur Herstellung eines fertigen Bauelements mit Fugendichtbändem gemäß der vorliegenden Erfindung. Jedes erfindungsgemäße Fugendichtband kann so zur Abdichtung verwendet werden.

Wie aus dem oben Ausgeführten ersichtlich wird, eignet sich das erfindungsgemäße Fugendichtband besonders dazu, in einfacher Weise eine Bauwerksfuge zwischen zwei aneinandergrenzenden Bauteilen sicher abzudichten, insbesondere gegen Schall und/oder Rauch und gegebenenfalls auch gegen Feuer.

Ferner ist die Anwendung sehr montagefreundlich, da keine zusätzliche Befestigung des Fugendichtbandes etwa an dem Profil oder an einem weiteren Anschlussbauteil, wie eine Gipskartonplatte, notwendig ist. Die Montage ist daher denkbar einfach und der Arbeitsaufwand zur Montage des Fugendichtbandes ist deutlich reduziert. Mit der Erfindung wird daher eine sichere und zuverlässige Abdichtung von Fugen zwischen zwei Bauteilen, insbesondere zwischen einem Profil eines Trockenbauständerwerks und einem daran angrenzenden Bauteil, wie etwa eine Decke, Wand oder ein Boden, erreicht. Dabei kann eine beidseitige Abdichtung in nur einem Arbeitsgang erreicht werden, indem ein vorgefertigtes Fugendichtband bereitgestellt wird.

Weiterhin hat sich gezeigt, dass mit dem erfindungsgemäßen Fugendichtbandhervorragende Dichtigkeiten erzielt werden können, da eine gute Komprimierbarkeit des Dichtelementes durch Auswahl der Dichtmaterialien und/oder Geometriegestaltung ohne zusätzliche Hilfsmittel gewährleistest ist. Die Erfindung ermöglicht es auch, durch entsprechende Auswahl der Dichtmaterialien und/oder Geometriegestaltung den richtigen Abstand dem Anschlussbauteil zu der Gipskartonplatte zu ohne zusätzliche Hilfsmittel einzustellen, um besagte Vorkomprimierung zu erreichen.

Mit dem erfindungsgemäßen Fugendichtband kann auch sichergestellt werden, das bereits durch die Auswahl der Dichtmaterialien und/oder Geometriegestaltung genügend Material installiert wird, um eine hervorragende Dichtigkeit bei maximaler Bewegungsaufnahme zu gewährleisten.

Mit dem erfindungsgemäßen Fugendichtband können ferner Unebenheiten einer Bauteiloberfläche bereits beim Anordnen sicher abgedichtet werden, da das Dichtelement des Fugendichtbandes ausreichend fest an die Oberfläche des einen Bauteils und gleichzeitig an die Seitenflächen des anderen Bauteils angepresst wird.

In Anbetracht des Vorstehenden ist ersichtlich, dass die Aufgaben der Erfindung gelöst werden.

## Patentansprüche

1. Fugendichtband (1) zur Abdichtung einer Fuge zwischen einem ersten Bauteil und einem zweiten Bauteil, mit einem Dichtelement (2) und einer Klebeschicht (3), wobei das Dichtelement (2) eine vorbestimmte Geometrie aufweist, **dadurch gekennzeichnet dass** das Dichtelement (2) aus einem verformbaren, weichen, nach Kompression rückstellfähigen, intumeszierenden Schaumstoffmaterial besteht, wobei das Dichtelement (2) über seinen gesamten Umfang fest mit einer Deckschicht (4), vorzugsweise einer Kunststofffolie, verbunden ist und wobei die Klebeschicht (3) eine Selbstklebeschicht ist.

2. Fugendichtband (1) nach Anspruch 1, **dadurch gekennzeichnet, dass** das Dichtelement (2) ein Vollprofil oder Hohlprofil, bevorzugt ein Vollprofil, aufweist.

3. Fugendichtband (1) nach Anspruch 1 oder 2, **dadurch gekennzeichnet, dass** das Dichtelement (2) ein Rundprofil oder Mehreckprofil, insbesondere ein Rechteckprofil, Quadratprofil, Parallelogrammprofil oder Dreieckprofil, bevorzugt ein Rundprofil oder Rechteckprofil, aufweist.

4. Fugendichtband (1) nach einem der vorhergehenden Ansprüche, **dadurch gekennzeichnet, dass** das Dichtelement (2) mit einer überstehenden Folie, wie einem Folienstreifen (4a), versehen ist.

5. Fugendichtband (1) nach einem der vorhergehenden Ansprüche, **dadurch gekennzeichnet, dass** das Dichtelement (2) ein Vollprofil und Rundprofil aufweist, die Klebeschicht (3) eine Selbstklebeschicht ist und das Dichtelement (2) aus einem offenzelligen Polyurethanschaum besteht.

6. Fugendichtband (1) nach einem der Ansprüche 1 bis 4, **dadurch gekennzeichnet, dass** das Dichtelement (2) ein Vollprofil und Rundprofil aufweist, die Klebeschicht (3) eine Selbstklebeschicht ist und das Dichtelement (2) aus Zellkautschuk besteht.

7. Fugendichtband (1) nach einem der Ansprüche 1 bis 4, **dadurch gekennzeichnet, dass** das Dichtelement (2) ein Vollprofil und Rechteckprofil aufweist, die Klebeschicht (3) eine Selbstklebeschicht ist und das Dichtelement (2) aus Zellkautschuk besteht.

8. Fugendichtband (1) nach einem der Ansprüche 1 bis 4, **dadurch gekennzeichnet, dass** das Dichtelement (2) ein Vollprofil und Rechteckprofil aufweist, die Klebeschicht (3) eine Selbstklebeschicht ist und das Dichtelement (2) aus einem offenzelligen Polyurethanschaum besteht.

9. Dichtanordnung zur Abdichtung einer Fuge zwischen zwei aneinander anliegenden Bauteilen mit wenigstens einem ersten Bauteil (5), einem zweiten Bauteil (6) und einem Fugendichtband (1) nach einem der Ansprüche 1 bis 8,
**dadurch gekennzeichnet,**
**dass** das Dichtelement (2) im oberen Bereich der Fuge, vorzugsweise am zweiten Bauteil (6), positioniert und dazu konfiguriert ist, die Fuge von außen abzudichten.

10. Dichtanordnung nach Anspruch 9, **dadurch gekennzeichnet, dass** das Dichtelement (2) auf Stoß mit dem ersten Bauteil (5) angeordnet ist.

11. Dichtanordnung nach Anspruch 9 oder 10, **dadurch gekennzeichnet, dass** das Dichtelement (2) an dem zweiten Bauteil (6) positioniert und fixiert ist.

12. Dichtanordnung nach einem der Ansprüche 9 bis 11, **dadurch gekennzeichnet, dass** das erste Bauteil (5) ein Rahmenprofil einer Trockenbauwand und das zweite Bauteil (6) eine Wand, eine Decke oder ein Boden, vorzugsweise eine Decke, eines Bauwerks ist.

## Claims

1. A joint sealing tape (1) for sealing a joint between a first building part and a second building part, the tape comprising a sealing element (2) and an adhesive layer (3), the sealing element (2) having a predetermined geometry, **characterized in that** the sealing element (2) consists of a deformable, soft, intumescent foam material which is resilient after compression, the sealing element (2) being rigidly connected over its entire circumference to a cover layer (4), preferably a plastics film, and the adhesive layer (3) being a self-adhesive layer.

2. The joint sealing tape (1) according to claim 1, **characterized in that** the sealing element (2) has a solid profile or hollow profile, preferably a solid profile.

3. The joint sealing tape (1) according to claim 1 or 2, **characterized in that** the sealing element (2) has a round profile or polygonal profile, in particular a rectangular profile, square profile, parallelogram profile or triangular profile, preferably a round profile or rectangular profile.

4. The joint sealing tape (1) according to one of the preceding claims, **characterized in that** the sealing element (2) is provided with a projecting film, such as a film strip (4a).

5. The joint sealing tape (1) according to one of the preceding claims, **characterized in that** the sealing element (2) has a solid profile and round profile, the adhesive layer (3) is a self-adhesive layer, and the sealing element (2) consists of an open-celled polyurethane foam.

6. The joint sealing tape (1) according to one of claims 1 to 4, **characterized in that** the sealing element (2) has a solid profile and round profile, the adhesive layer (3) is a self-adhesive layer, and the sealing element (2) consists of cellular rubber.

7. The joint sealing tape (1) according to one of claims 1 to 4, **characterized in that** the sealing element (2) has a solid profile and rectangular profile, the adhesive layer (3) is a self-adhesive layer, and the sealing element (2) consists of cellular rubber.

8. The joint sealing tape (1) according to one of claims 1 to 4, **characterized in that** the sealing element (2) has a solid profile and rectangular profile, the adhesive layer (3) is a self-adhesive layer, and the sealing element (2) consists of an open-celled polyurethane foam.

9. A sealing arrangement for sealing a joint between two abutting building parts, comprising at least a first building part (5), a second building part (6) and a joint sealing tape (1) according to one of claims 1 to 8,
**characterized in that**
the sealing element (2) is positioned in the upper region of the joint, preferably on the second building part (6), and is configured to seal the joint from outside.

10. The sealing arrangement according to claim 9, **characterized in that** the sealing element (2) is arranged so as to abut the first building part (5).

11. The sealing arrangement according to claim 9 or 10, **characterized in that** the sealing element (2) is positioned and fixed on the second building part (6).

12. The sealing arrangement according to one of claims 9 to 11, **characterized in that** the first building part (5) is a frame profile of a drywall and the second building part (6) is a wall, a ceiling or a floor, preferably a ceiling, of a building structure.

## Revendications

1. Bande d'étanchéité pour joints (1) permettant de sceller un joint entre un premier composant et un second composant, comportant un élément d'étanchéité (2) et une couche adhésive (3), dans laquelle l'élément d'étanchéité (2) présente une géométrie prédéterminée, **caractérisée en ce que** l'élément d'étanchéité (2) est constitué d'un matériau en mousse intumescent, malléable, mou et résilient après compression, dans laquelle l'élément d'étanchéité (2) est relié de manière fixe à une couche de recouvrement (4), de préférence un film plastique, sur toute sa périphérie, et dans laquelle la couche adhésive (3) est une couche auto-adhésive.

2. Bande d'étanchéité pour joints (1) selon la revendication 1,
**caractérisée en ce que** l'élément d'étanchéité (2) présente un profil plein ou un profil creux, de préférence un profil plein.

3. Bande d'étanchéité pour joints (1) selon la revendication 1 ou 2, **caractérisée en ce que** l'élément d'étanchéité (2) présente un profil rond ou un profil polygonal, en particulier un profil rectangulaire, profil carré, profil en parallélogramme ou profil triangulaire, de préférence un profil rond ou un profil rectangulaire.

4. Bande d'étanchéité pour joints (1) selon l'une quelconque des revendications précédentes, **caractérisée en ce que** l'élément d'étanchéité (2) est pourvu d'un film saillant, tel qu'un ruban de film (4a).

5. Bande d'étanchéité pour joints (1) selon l'une quelconque des revendications précédentes, **caractérisée en ce que** l'élément d'étanchéité (2) présente un profil plein et un profil rond, la couche adhésive (3) est une couche auto-adhésive et l'élément d'étanchéité (2) est constitué d'une mousse polyuréthane à cellules ouvertes.

6. Bande d'étanchéité pour joints (1) selon l'une des revendications 1 à 4, **caractérisée en ce que** l'élément d'étanchéité (2) présente un profil plein et un profil rond, la couche adhésive (3) est une couche auto-adhésive et l'élément d'étanchéité (2) est constitué de caoutchouc cellulaire.

7. Bande d'étanchéité pour joints (1) selon l'une des revendications 1 à 4, **caractérisée en ce que** l'élément d'étanchéité (2) présente un profil plein et un profil rectangulaire, la couche adhésive (3) est une couche auto-adhésive et l'élément d'étanchéité (2) est constitué de caoutchouc cellulaire.

8. Bande d'étanchéité pour joints (1) selon l'une des revendications 1 à 4, **caractérisée en ce que** l'élément d'étanchéité (2) présente un profil plein et un profil rectangulaire, la couche adhésive (3) est une couche auto-adhésive et l'élément d'étanchéité (2) est constitué d'une mousse polyuréthane à cellules ouvertes.

9. Agencement d'étanchéité permettant de sceller un joint entre deux composants adjacents comportant au moins un premier composant (5), un second composant (6) et une bande d'étanchéité pour joints (1) selon l'une des revendications 1 à 8,
**caractérisé en ce que** l'élément d'étanchéité (2) est positionné dans la zone supérieure du joint, de préférence sur le second composant (6), et est conçu pour sceller le joint depuis l'extérieur.

10. Agencement d'étanchéité selon la revendication 9, **caractérisé en ce que** l'élément d'étanchéité (2) est disposé en butée avec le premier composant (5).

11. Agencement d'étanchéité selon la revendication 9 ou 10,
**caractérisé en ce que** l'élément d'étanchéité (2) est positionné et fixé sur le second composant (6).

12. Agencement d'étanchéité selon l'une des revendications 9 à 11, **caractérisé en ce que** le premier composant (5) est un profilé de cadre d'une cloison sèche et le second composant (6) est une paroi, un plafond ou un plancher, de préférence un plafond, d'un bâtiment.
